Europäisches Patentamt

(19) European Patent Office

Office européen des brevets

(11) Numéro de publication: **0 126 003 B1**

(12) **FASCICULE DE BREVET EUROPEEN**

(45) Date de publication du fascicule du brevet: 16.08.89

(51) Int. Cl.⁴: **G 02 B 6/38**, G 02 B 6/42

(21) Numéro de dépôt: **84400970.4**

(22) Date de dépôt: **11.05.84**

(54) Procédé et dispositif de connexion entre une fibre optique et un composant d'optique intégrée comportant un guide d'onde.

(30) Priorité: **17.05.83 FR 8308141**

(43) Date de publication de la demande: **21.11.84 Bulletin 84/47**

(45) Mention de la délivrance du brevet: **16.08.89 Bulletin 89/33**

(84) Etats contractants désignés: **DE GB NL SE**

(56) Documents cités:
**WO-A-82/03922**
**FR-A- 2 322 383**
**FR-A- 2 497 362**

**PATENTS ABSTRACTS OF JAPAN, vol. 6, no. 92 (P-119)[970], 29 mai 1982 & JP - A - 57 29 022**
**PATENTS ABSTRACTS OF JAPAN, vol. 4, no. 15 (E-170), 5 février 1980, page 45 E 170 & JP - A - 54 155 850**
**PATENTS ABSTRACTS OF JAPAN, vol. 3, no. 135 (E-150), 10 novembre 1979, page 129 E 150 & JP - A - 54 113 348**

(73) Titulaire: **ETAT FRANCAIS représenté par le Ministre des PTT (Centre National d'Etudes des Télécommunications), 38-40 rue du Général Leclerc, F-92131 Issy-les-Moulineaux (FR)**

(72) Inventeur: **Carenco, Alain, 4 rue Paul-Henri Thilloy, F-92340 Bourg-la-Reine (FR)**
Inventeur: **Riviere, Luc, 37, Avenue du Château, F-92190 Meudon (FR)**

(74) Mandataire: **Mongrédien, André et al, c/o BREVATOME 25, rue de Ponthieu, F-75008 Paris (FR)**

**Description**

La présente invention concerne un procédé et un dispositif de connexion entre au moins une fibre optique et un composant d'optique intégrée comportant au moins un guide d'onde. Elle s'applique notamment à la réalisation de systèmes de communication optiques.

On connaît de nombreux composants d'optique intégrée. Ces composants comportent, pour la plupart, des guides d'onde à deux dimensions, de façon à obtenir le confinement optimum de la lumière sur une longueur convenable. Lorsque l'on souhaite insérer ces composants dans des circuits optiques, par exemple des circuits de transmission, de traitement de signaux ou d'acquisition de paramètres physiques, il est important de connecter avec le minimum de pertes les guides d'onde, qui peuvent être monomodes ou multimodes, aux fibres optiques que comportent lesdits circuits.

On connaît par ailleurs une technique pour connecter une fibre optique à un guide d'onde d'un composant d'optique intégrée. Cette technique consiste d'abord à maintenir la fibre dans un support, de façon à manipuler plus aisément cette fibre. Le support peut être un tube métallique, une plaquette de silicium préalablement gravée de façon à comporter des sillons en forme de V, ou un support moulé par exemple en matière plastique. La fibre est ensuite approchée du guide au moyen de micromanipulateurs. Pour ce faire, deux méthodes sont utilisées:

La première méthode est connue sous le nom de «flip-chip». Elle n'est utilisable que pour des composants plans, sans électrodes ou sans plaquettes d'adaptation d'impédance. En outre, l'alignement de la fibre optique avec le guide d'onde nécessite de réaliser la plaquette portant ce guide d'onde à l'aide d'un matériau transparent et de polir cette plaquette sur ses deux faces.

La deuxième méthode consiste à fixer le support de la fibre sur un support solidaire du support du guide d'onde, au moyen d'une colle. Cette deuxième méthode se heurte au problème du retrait de la colle. En outre, une tenue mécanique correcte de la fibre au voisinage du guide d'onde nécessite en pratique le polissage de l'ensemble constitué par la fibre et par son support, de façon que l'extrémité de la fibre affleure le bord de ce support. Dans le cas où il s'agit de connecter respectivement plusieurs fibres optiques montées sur un même support, à des guides d'onde disposés également sur un même support, la deuxième méthode présente, certes, l'avantage de permettre une connexion collective, mais présente également l'inconvénient de ne pas permettre la correction des défauts de positionnement initial des fibres dans leur support, ou des défauts d'excentrement des cœurs des fibres optiques.

Pour la première méthode, on se référera par exemple à l'article de BULMER et al publié dans Appl. Phys. Lett., vol. 37, n° 4, 15 août 1980, p. 351 à 353, et pour la deuxième méthode, à l'article de NODA et al. publié dans Applied Optics, vol. 17, n° 13, 1er juillet 1978, p. 2092 à 2096.

La présente invention a justement pour objet un procédé qui ne présente pas les inconvénients des méthodes précédentes, notamment en ce qu'il ne nécessite pas de composants d'optique intégrée plans ou transparents, qu'il permette d'éviter, à l'aide d'un montage simple et statique, tout problème de retrait de colle, qu'il évite le polissage de l'ensemble constitué par la fibre et par le support de celle-ci et enfin, qu'il permet, dans le cas où il s'agit de connecter plusieurs fibres disposées sur un même support à des guides d'onde également disposés sur un même support, de pallier les défauts de positionnement initial des fibres dans leur support ou les défauts d'excentrement des cœurs de ces fibres.

On connaît, par FR-A-2 497 362, un procédé d'alignement d'une fibre optique et d'un guide d'onde intégré, qui sont respectivement associés à des supports. Ce procédé consiste simplement à régler la position de la fibre par rapport au guide d'onde, à fixer ensuite la fibre sur son support puis les supports l'un à l'autre.

De façon précise, la présente invention a pour objet un procédé de connexion entre au moins une fibre optique et un composant d'optique intégrée comportant au moins un guide d'onde, ce guide d'onde pouvant être une autre fibre optique, chaque fibre optique et chaque guide d'onde étant pourvus d'une extrémité destinée à la connexion, chaque fibre étant destinée à être reliée à un guide d'onde, procédé caractérisé en ce qu'il consiste:

— à fixer le composant sur un support principal,

— à fixer chaque fibre sur un support de fibre de façon que l'extrémité de chaque fibre dépasse dudit support de fibre,

— à fixer l'extrémité de chaque fibre à l'extrémité du guide d'onde correspondant de façon à permettre le passage de lumière de la fibre au guide d'onde et réciproquement, et ensuite

— à rendre rigidement solidaires l'un de l'autre le support de fibre et le support principal.

Par «guide d'onde», on entend donc non seulement un guide d'onde du genre de ceux qui sont utilisés dans le domaine de l'Optique Intégrée, comme par exemple les guides d'onde formés par un canal de propagation diffusé dans un substrat, mais encore une autre fibre optique.

Selon une caractéristique préférée du procédé objet de l'invention, l'extrémité de la fibre optique est fixée à l'extrémité du guide d'onde au moyen d'une colle transparente à ladite lumière.

De préférence, la fibre optique et le guide d'onde ayant des indices de réfraction différents, on utilise une colle dont l'indice de réfraction est compris entre l'indice de réfraction de la fibre et l'indice de réfraction du guide d'onde, et en tout cas meilleur que l'indice de réfraction de l'air.

Selon une caractéristique particulière du procédé objet de l'invention, ladite colle est en outre une colle polymérisable.

Selon une autre caractéristique particulière, la colle destinée à fixer l'extrémité de la fibre à l'extrémité du guide d'onde est en outre une colle polymérisable au moyen d'un rayonnement et polymérisée en envoyant le rayonnement sur ladite colle par l'intermédiaire d'une lunette de visée mise au point sur lesdites extrémités, celles-ci étant rapprochées et reliées par ladite colle, la lunette permettant de contrôler préalablement le positionnement relatif desdites extrémités.

Selon une autre caractéristique particulière, le support de fibre est rendu rigidement solidaire du support principal au moyen d'une colle polymérisable et la colle destinée à fixer l'extrémité de la fibre à l'extrémité du guide d'onde est polymérisée avant la colle destinée à rendre le support de fibre rigidement solidaire du support principal et en évitant toute polymérisation de cette dernière.

Selon une autre caractéristique particulière, la colle destinée à rendre le support de fibre et le support principal solidaires l'un de l'autre est une colle polymérisable au moyen d'un rayonnement, le support de fibre comporte une pièce apte à transmettre au moins partiellement le rayonnement prévu pour polymériser la colle destinée à rendre le support de fibre et le support principal solidaires l'un de l'autre, et cette dernière colle est disposée entre ladite pièce et le support principal de manière à rendre ces derniers solidaires l'un de l'autre, et polymérisée en envoyant sur elle et à travers la pièce, le rayonnement qui lui correspond.

On peut procéder par masquage de la colle destinée à rendre solidaires l'un de l'autre le support de fibre et le support principal, pour éviter de la polymériser pendant que l'on polymérise la colle destinée à fixer l'extrémité de la fibre et l'extrémité du guide d'onde. Pour effectuer une polymérisation avant l'autre, on peut également utiliser la lunette de visée dont il était question précédemment et qui permet une polymérisation sélective.

Selon une autre caractéristique préférée du procédé objet de l'invention, avant d'être fixées l'une à l'autre, l'extrémité de la fibre et l'extrémité du guide d'onde sont positionnées relativement l'une par rapport à l'autre de façon qu'il passe un maximum de lumière de la fibre au guide d'onde ou réciproquement.

Bien entendu, dans l'invention, on peut avoir à connecter une fibre optique à un guide d'onde ou un certain nombre de fibres optiques au même nombre de guides d'onde, chaque fibre étant respectivement reliée à un guide d'onde. Les fibres peuvent être alors disposées sur un même support et les guides d'onde peuvent l'être également.

L'invention sera mieux comprise à la lecture de la description qui suit, d'exemples de réalisation donnés à titre indicatif et non limitatif, en référence aux dessins annexés sur lesquels:

– la figure 1 est une vue schématique en perspective d'un mode de réalisation particulier du dispositif objet de l'invention,

– la figure 2 est une vue de face schématique de ce dispositif,

– la figure 3 est une vue schématique d'une installation permettant de contrôler le positionnement relatif de la fibre et du guide d'onde que l'on souhaite connecter l'un à l'autre,

– la figure 4 est une vue schématique d'un autre mode de réalisation particulier du dispositif objet de l'invention, et

– la figure 5 est une vue schématique d'un autre mode de réalisation particulier du dispositif objet de l'invention, comportant un certain nombre de fibres optiques et le même nombre de guides d'onde, les fibres étant respectivement connectées aux guides d'onde.

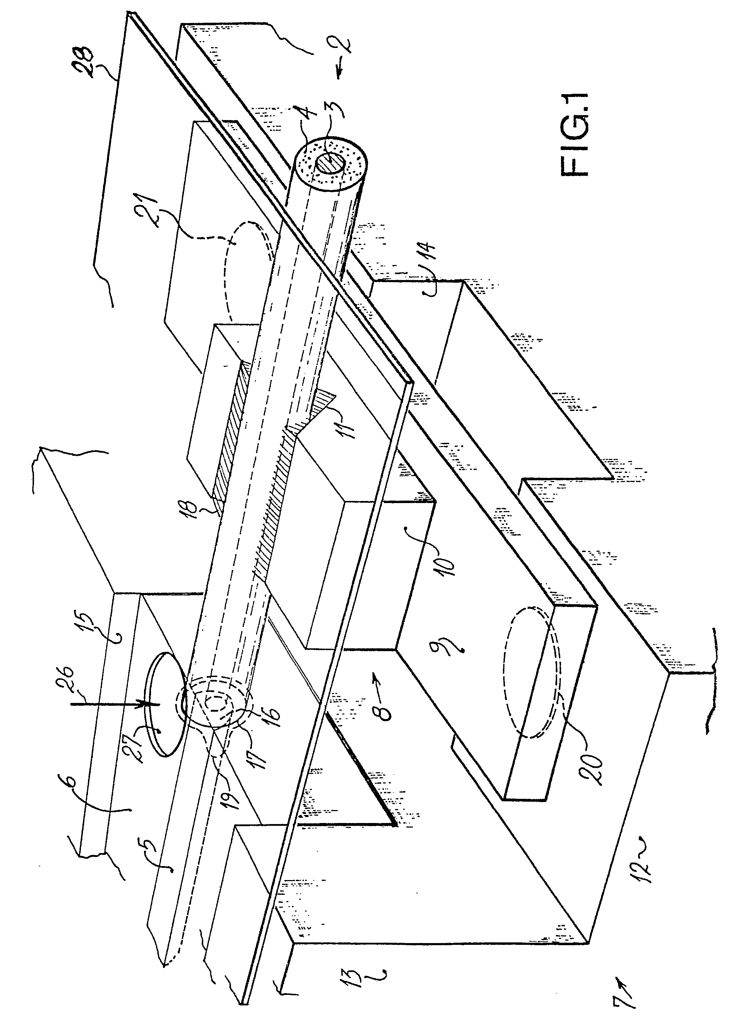

Sur la figure 1, on a représenté schématiquement en perspective, un mode de réalisation particulier du dispositif objet de l'invention. Il permet de connecter une fibre optique 2 comportant de façon connue, un cœur 3 et une gaine 4, à un guide d'onde 5 d'un composant d'optique intégrée 6. Le guide d'onde consiste par exemple en un canal de propagation de lumière, réalisé par diffusion d'un ruban de titane dans un substrat en LiNbO$_3$, en forme de plaquette, faisant partie dudit composant.

Le dispositif comprend essentiellement un support principal 7 par exemple en laiton, et un support 8 de fibre constitué par une pièce transparente 9, telle qu'une plaquette de verre, sur laquelle est collé un élément porteur 10 par exemple en silicium et de forme parallélépipédique, dans lequel est usiné par attaque chimique un sillon 11 en forme de V, cette forme résultant de l'anisotropie de l'attaque chimique.

Le support principal 7 comporte une première partie 12 et une seconde partie 13 surélevée par rapport à la première. Une première rainure 14 et une seconde rainure 15 sont respectivement pratiquées en regard l'une de l'autre dans la première partie 12 et dans la seconde partie 13, à partir de la surface de celles-ci et selon une même orientation. Le composant 6 est fixé dans la seconde rainure 15 prévue à cet effet, de façon que le guide d'onde 5 ait ladite orientation et que l'extrémité 16 du guide d'onde 5, destinée à être connectée à une extrémité 17 de la fibre 2, soit tournée vers la première partie 12. La hauteur relative des deux parties 12 et 13 est prévue pour que, la fibre étant fixée dans le sillon 11 et la plaquette étant fixée par de la colle à la surface, supposée plane, de la première partie 12, la fibre se trouve au niveau du guide d'onde une fois la colle sèche, en utilisant une couche de colle d'épaisseur minimum afin de limiter le retrait de celle-ci. La plaquette 9 est fixée sur la surface de la première partie 12, au-dessus de la première rainure 14 permettant des manipulations de ladite plaquette préalablement à la fixation de celle-ci, et de façon que le sillon 11 soit dans le prolongement du guide d'onde 5. La fibre 2 est fixée dans ce sillon 11 de façon que son extrémité 17, destinée à la connexion avec le guide d'onde, dépasse de l'élément 10 et de la plaquette 9 et se trouve au voisinage de l'extrémité 16 du guide d'onde, extrémité 16 à laquelle elle est fixée de façon que son cœur 3 soit effectivement en regard de ladite extrémité 16.

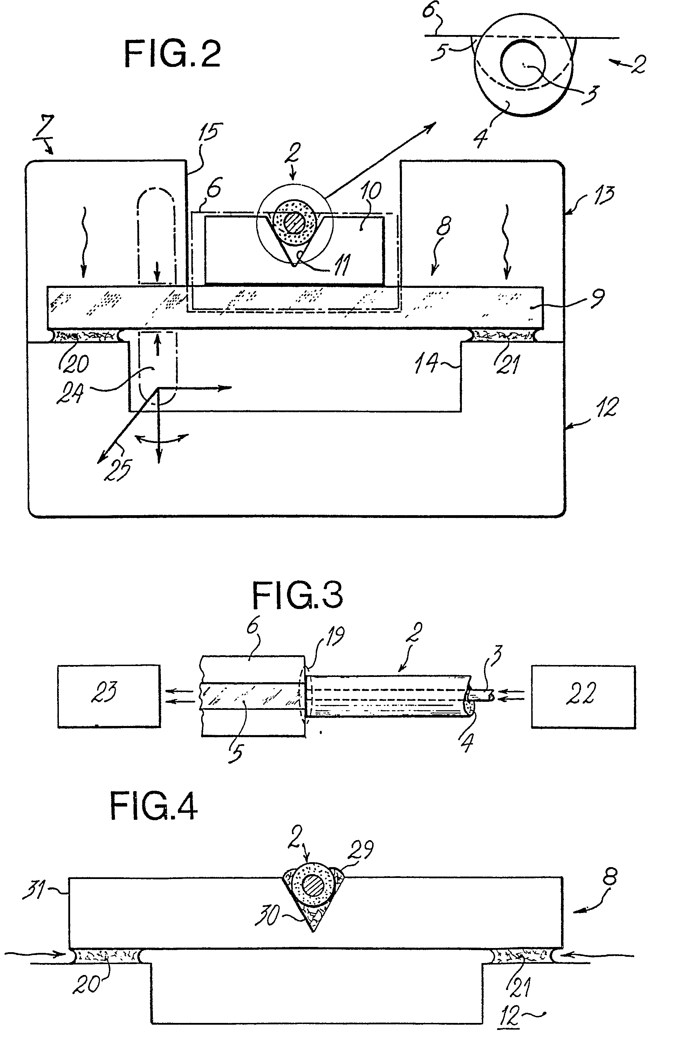

Le procédé selon l'invention, permettant de réaliser le dispositif représenté sur la figure 1, est alors le suivant: la fibre 2 est préalablement fixée dans le sillon 11, au moyen d'une couche de colle 18 par exemple, l'extrémité 17 de la fibre 2 dépassant de plusieurs millimètres, de 5 mm par exemple, du bord de la plaquette en verre 9. Le composant 6 est collé dans sa rainure 15 de la façon indiquée plus haut. L'extrémité 17 de la fibre est enduite d'une couche 19 de colle polymérisable au moyen d'un rayonnement ultra-violet, par exemple d'une couche de colle commercialisée sous la marque NORDLAND 61. (Ce type de colle est transparent au rayonnement infrarouge destiné à être propagé par la fibre et par le guide d'onde). La colle polymérisable se maintient sur ladite extrémité par capillarité. Deux points 20 et 21 de ladite colle polymérisable sont respectivement appliqués sur la surface de la première partie 12 du support principal 7, de part et d'autre de la première rainure 14. Une fois alignée par rapport au guide d'onde 5, la fibre 2 est mise en contact, par son extrémité 17, avec l'extrémité 16 du guide d'onde 5 de façon que le cœur 3 de la fibre se trouve précisément en contact avec ladite extrémité 16 du guide d'onde 5 (figure 2). La plaquette 9 est posée sur ladite première partie 12, la partie inférieure de la plaquette venant alors effleurer les points de colle 20 et 21 sur ladite première partie 12. La hauteur relative des deux parties 12 et 13 est prévue pour que les deux points de colle 20 et 21 forment alors des couches assez minces, de l'ordre de 250 μm par exemple.

Le positionnement relatif des extrémités 16 et 17 de la fibre et du guide d'onde est réalisé par l'intermédiaire de la plaquette 9 qui est prise dans des moyens de serrage 24 (figure 2) rendus solidaires de moyens de microdéplacement suivant les trois directions de l'espace et éventuellement angulaire, symbolisés par des flèches 25 sur la figure 2. On agit sur lesdits moyens de microdéplacement de façon qu'il passe un maximum de lumière de la fibre au guide d'onde ou réciproquement, cette lumière étant par exemple injectée dans la fibre 2 à partir d'une source lumineuse 22 (figure 3) et envoyée du guide d'onde 5 sur un photodétecteur 23 de façon connue dans l'état de la technique.

Lorsque le positionnement relatif desdites extrémités 16 et 17 est optimisé, la polymérisation de la couche de colle 19 reliant lesdites extrémités 16 et 17 est effectuée en envoyant un rayonnement ultraviolet 26 sur ladite couche de colle 19, à partir d'une source de rayonnement ultraviolet non représentée et à travers une ouverture 27 pratiquée dans un masque 28 opaque au rayonnement ultraviolet, prévu pour empêcher la polymérisation des points de colle 20 et 21. L'extrémité 17 de la fibre étant ainsi figée, le masque 28 est enlevé et les points de colle 20 et 21 sont polymérisés, en envoyant sur ceux-ci le rayonnement ultraviolet, à travers la plaquette de verre 9 et perpendiculairement à celle-ci (figure 2). Les moyens de serrage 24 peuvent alors être ôtés.

La distance entre les points de colle 20 et 21 et la distance entre chacun de ceux-ci et la couche de colle 19 reliant les extrémités 16 et 17 de la fibre et du guide d'onde sont suffisantes pour que le retrait de la colle en les points 20 et 21, retrait qui est d'ailleurs peu important étant donné la faible épaisseur de colle, n'ait pratiquement aucune influence sur la connexion entre la fibre et le guide d'onde, une certaine flexion de la fibre étant possible dans la partie de celle-ci qui dépasse de son support 9.

En outre, la couche de colle 19, qui est mince, la fibre et le guide d'onde étant très proches l'un de l'autre, permet de minimiser les pertes de lumière par réflexion (et par diffusion dans le cas d'un mauvais polissage ou clivage de la fibre et/ou du guide d'onde) à l'interface des deux extrémités 16 et 17. La couche de colle 19 permet également d'éviter toute pollution ultérieure desdites extrémités 16 et 17.

Au lieu d'être fixée sur l'élément porteur 10, la fibre optique 2 pourrait être fixée directement sur la plaquette de verre 9.

Dans un autre mode de réalisation particulier de l'invention, la fibre 2 est fixée par une couche de colle 29 (figure 4) dans un sillon 30 usiné dans une plaquette de silicium 31 constituant alors un support 8 de fibre. Cette plaquette 31 est fixée comme la plaquette de verre 9, sur ladite première partie 12 du support principal 7, au moyen des deux points de colle 20 et 21 que l'on polymérise dans ce cas, par des rayonnements ultraviolets envoyés de façon rasante sur les points de colle 20 et 21, étant donné l'opacité du silicium auxdits rayonnements.

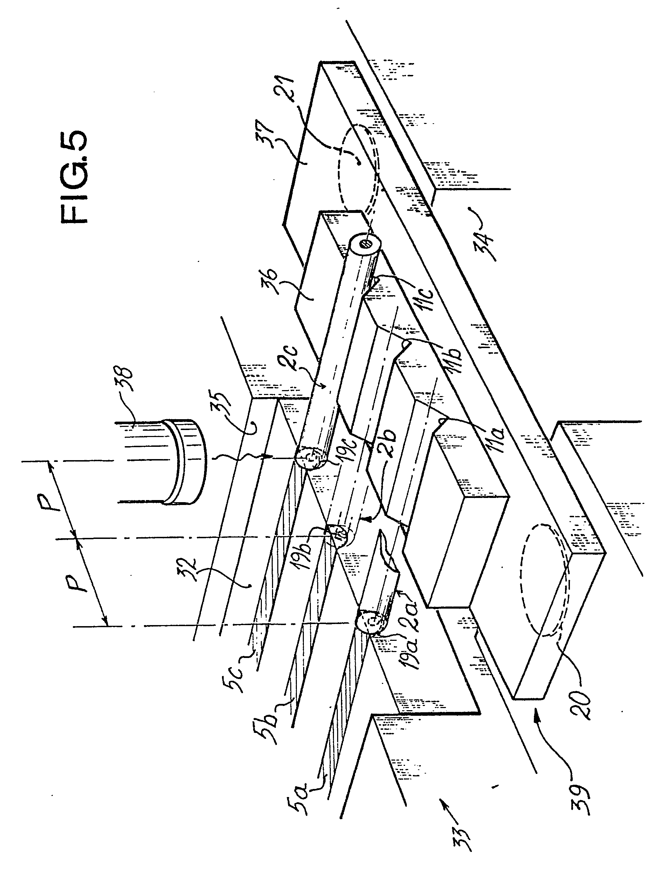

Sur la figure 5, on a représenté schématiquement un autre mode de réalisation particulier de l'invention, dans lequel plusieurs fibres 2a, 2b, 2c (trois par exemple), sont respectivement connectées à des guides d'onde 5a, 5b, 5c. Ceux-ci forment des canaux parallèles par exemple équidistants suivant un pas P, sur un substrat faisant partie d'un composant d'optique intégrée 32. On utilise un support principal 33 constitué de la même façon que le support principal 7 décrit en référence à la figure 1, et pourvu de deux rainures 34 et 35. Le composant 32 est fixé dans la rainure 35. Les fibres 2a, 2b, 2c sont respectivement fixées dans des sillons 11a, 11b, 11c parallèles et équidistants suivant ledit pas P. Ces sillons sont usinés dans une plaquette de silicium 36 fixée sur une plaquette en verre 37, l'ensemble de ces deux plaquettes constituant un support 39 de fibres. La plaquette en verre 37 est fixée au-dessus de la rainure 34, sur le support principal 33, à l'aide de deux points de colle 20 et 21 situés de part et d'autre de la rainure 34. La dispositin relative des constituants du dispositif représenté sur la figure 5 est identique à la disposition relative des constituants du dispositif représenté sur la figure 1. Les fibres 2a, 2b, 2c dépassent des plaquettes 36 et 37 et sont respectivement fixées par leurs extrémités de connexion aux extrémités de connexion des guides d'onde 5a, 5b, 5c, à l'aide de couches de colle 19a, 19b, 19c respectivement interposées entre lesdites extrémités.

Le procédé de réalisation du dispositif représenté sur la figure 5 est comparable au procédé de réalisation du dispositif représenté sur la figure 1. Les fibres sont fixées dans leurs sillons respectifs et les plaquettes 36 et 37 sont fixées l'une à l'autre. La colle polymérisable par un rayonnement ultraviolet est ensuite disposée aux extrémités des fibres et en les deux points 20 et 21 du support principal 33.

Ensuite, selon un premier mode opératoire, on fixe simultanément les fibres 2a, 2b, 2c aux guides d'onde 5a, 5b, 5c, en polymérisant simultanément les couches de colle 19a, 19b, 19c, puis l'on polymérise les points de colle 20 et 21 de façon à fixer la plaquette 37 au support principal 33.

Selon un deuxième mode opératoire, les fibres sont fixées l'une après l'autre aux guides d'onde, en polymérisant successivement les couches de colle 19a, 19b, 19c, puis l'on polymérise les points de colle 20 et 21 de façon à fixer la plaquette 37 au support principal 33. Ce second mode opératoire est particulièrement intéressant lorsque les tolérances de positionnement des fibres par rapport aux guides d'onde sont faibles, notamment dans le cas de fibres et de guides d'onde monomodes.

Pour polymériser simultanément les couches de colle 19a, 19b, 19c, sans polymériser les points de colle 20 et 21, on peut utiliser un masque convenablement percé, opaque au rayonnement ultraviolet.

De même, pour polymériser une couche de colle donnée 19a ou 19b ou 19c sans polymériser les autres ni les points de colle 20 et 21, on peut utiliser un masque opaque au rayonnement ultraviolet et convenablement percé, de façon que le rayonnement ultraviolet n'atteigne que la couche considérée. Au lieu de procéder par masquage, on peut employer une lunette de visée 38. Celle-ci permet d'abord de positionner correctement une fibre donnée par rapport au guide d'onde correspondant, en mettant au point sur la couche de colle correspondante de façon à observer celle-ci et à pouvoir effectuer un positionnement correct. Ensuite, le rayonnement ultraviolet est envoyé sur ladite couche de colle à travers la lunette de visée 38 focalisée sur cette couche. On recommence ces opérations de mise au point et d'irradiation par le rayonnement ultraviolet pour chacune des autres couches. La lunette de visée 38 constitue ainsi un moyen avantageux de polymérisation sélective de la colle.

**Revendications**

1. Procédé de connexion entre au moins une fibre optique (2 ou 2a, 2b, 2c) et un composant d'optique intégrée (6 ou 32) comportant au moins un guide d'onde (5 ou 5a, 5b, 5c), ce guide d'onde pouvant être une autre fibre optique, chaque fibre optique et chaque guide d'onde étant pourvus d'une extrémité destinée à la connexion, chaque fibre étant destinée à être reliée à un guide d'onde, procédé caractérisé en ce qu'il consiste:

– à fixer le composant sur un support principal (7 ou 33),

– à fixer chaque fibre sur un support de fibre (8 ou 39) de façon que l'extrémité de chaque fibre dépasse dudit support de fibre,

– à fixer l'extrémité de chaque fibre (2 ou 2a, 2b, 2c) à l'extrémité du guide d'onde correspondant (5 ou 5a, 5b, 5c) de façon à permettre le passage de lumière de la fibre au guide d'onde et réciproquement, et ensuite

– à rende rigidement solidaires l'un de l'autre le support de fibre (8 ou 39) et le support principal (7 ou 33).

2. Procédé selon la revendication 1, caractérisé en ce que l'extrémité de la fibre optique (2 ou 2a, 2b, 2c) est fixée à l'extrémité du guide d'onde (5 ou 5a, 5b, 5c) au moyen d'une colle transparente à ladite lumière.

3. Procédé selon la revendication 2, caractérisé en ce que ladite colle est en outre une colle polymérisable.

4. Procédé selon la revendication 2, caractérisé en ce que la colle destinée à fixer l'extrémité de la fibre (2 ou 2a, 2b, 2c) à l'extrémité du guide d'onde (5 ou 5a, 5b, 5c) est en outre une colle polymérisable au moyen d'un rayonnement et polymérisée en envoyant le rayonnement sur ladite colle par l'intermédiaire d'une lunette de visée (38) mise au point sur lesdites extrémités, celles-ci étant rapprochées et reliées par ladite colle, la lunette permettant de contrôler préalablement le positionnement relatif desdites extrémités.

5. Procédé selon l'une quelconque des revendications 3 et 4, caractérisé en ce que le support de fibre (8 ou 39) est rendu rigidement solidaire du support principal (7 ou 33) au moyen d'une colle polymérisable et en ce que la colle destinée à fixer l'extrémité de la fibre (2 ou 2a, 2b, 2c) à l'extrémité du guide d'onde (5 ou 5a, 5b, 5c) est polymérisée avant la colle destinée à rendre le support de fibre rigidement solidaire du support principal et en évitant toute polymérisation de cette dernière.

6. Procédé selon la revendication 5, caractérisé en ce que la colle destinée à rendre le support de fibre (8 ou 39) et le support principal (7 ou 33) solidaires l'un de l'autre est une colle polymérisable au moyen d'un rayonnement, en ce que le support de fibre comporte une pièce (9 ou 37) apte à transmettre au moins partiellement le rayonnement prévu pour polymériser la colle destinée à rendre le support de fibre et le support principal solidaires l'un de l'autre, et en ce que cette dernière colle est disposée entre ladite pièce (9 ou 37) et le support principal (7 ou 33) de manière à rendre ces derniers solidaires l'un de l'autre, et polymérisée en envoyant sur elle et à travers la pièce (9 ou 37), le rayonnement qui lui correspond.

7. Procédé selon l'une quelconque des revendications 1 à 6, caractérisé en ce que, avant d'être fixées l'une à l'autre, l'extrémité de la fibre (2 ou 2a, 2b, 2c) et l'extrémité du guide d'onde (5 ou 5a, 5b, 5c) sont positionnées relativement l'une par rapport à l'autre de façon qu'il passe un maximum de lumière de la fibre au guide d'onde ou réciproquement.

**Claims**

1. Process for connecting at least one optical fibre (2 or 2a, 2b, 2c) and an integrated optical component (6 or 32) comprising at least one waveguide (5 or 5a, 5b, 5c), whereby said waveguide can be another optical fibre, each optical fibre and each waveguide being provided with an end intended for connection purposes, each fibre being for connection to a waveguide, characterized in that it comprises:
   – fixing the component to a main support (7 or 33),
   – attaching each fibre to a fibre support (8 or 39) so that the end of each fibre extends beyond said fibre support,
   – attaching the end of each fibre (2 or 2a, 2b, 2c) to the end of the corresponding waveguide (5 or 5a, 5b, 5c) so as to enable light to pass from the fibre to the waveguide and conversely, and then
   – rigidly connecting to one another the fibre support (8 or 39) and the main support (7 or 33).

2. Process according to claim 1, characterized in that the end of the optical fibre (2 or 2a, 2b, 2c) is attached to the end of the waveguide (5 or 5a, 5b, 5c) by means of a light-transparent glue.

3. Process according to claim 2, characterized in that the glue is also a polymerizable glue.

4. Process according to claim 2, characterized in that the glue adapted to attach the end of the fibre (2 or 2a, 2b, 2c) to the end of the waveguide (5 or 5a, 5b, 5c) is also a glue which can be polymerized by means of a radiation and is polymerized by aiming the radiation at the glue via a sighting telescope (38) focussed on such ends, the ends being brought together and connected by the glue, while the telescope enables the relative positioning of the ends to be controlled beforehand.

5. Process according to one of the claims 3 and 4, characterized in that the fibre support (8 or 39) is rigidly connected to the main support (7 or 33) by a polymerizable glue, and the glue adapted to attach the end of the fibre (2 or 2a, 2b, 2c) to the end of the waveguide (5 or 5a, 5b, 5c) is polymerized before the glue adapted to connect the fibre support rigidly to the main support, while avoiding any polymerization of the last-mentioned glue.

6. Process according to claim 5, characterized in that the glue adapted to connect the fibre support (8 or 39) and the main support (7 or 33) rigidly to one another is a glue which can be polymerized by a radiation, the fibre support comprises a member (9 or 37) adapted to at least partially transmit the radiation provided to polymerize the glue adapted to connect the fibre support and the main support rigidly to one another, and the last-mentioned glue is so disposed between such member (9 or 37) for partially transmitting the radiation and the main support (7 or 33) as to connect these last-mentioned members rigidly to one another, the last-mentioned glue being polymerized by transmitting to it the corresponding radiation via the member (9 or 37) adapted to transmit the radiation.

7. Process according to any one of the claims 1 to 6, characterized in that before being attached to one another the end of the fibre (2 or 2a, 2b, 2c) and the end of the waveguide (5 or 5a, 5b, 5c) are so positioned in relation to one another that a maximum of light passes from the fibre to the waveguide or conversely.

**Patentansprüche**

1. Verbindungsverfahren zwischen wenigstens einer optischen Faser (2 oder 2a, 2b, 2c) und einer integrierten optischen Anordnung (6 oder 32), die wenigstens einen Wellenleiter (5 oder 5a, 5b, 5c) enthält, der ebenfalls eine optische Faser sein kann, wobei jede optische Faser und jeder Wellenleiter mit einem Ende versehen ist, das für die Verbindung bestimmt ist, wobei jede Faser dazu bestimmt ist, mit einem Wellenleiter verbunden zu werden, dadurch gekennzeichnet, daß es enthält:
   das Befestigen der Anordnung auf einem Hauptträger (7 oder 33),
   das Befestigen jeder Faser auf einem Faserträger (8 oder 39) derart, daß das Ende jeder Faser über den Faserträger vorsteht,
   das Befestigen des Endes jeder Faser (2 oder 2a, 2b, 2c) am Ende des entsprechenden Wellenleiters (5 oder 5a, 5b, 5c) derart, daß der Durchgang von Licht von der Faser in den Wellenleiter und umgekehrt möglich ist, und anschließend
   das starre Verbinden des Faserträgers (8 oder 39) und des Hauptträgers (7 oder 33) miteinander.

2. Verfahren nach Anspruch 1, dadurch gekennzeichnet, daß das Ende der optischen Faser (2 oder 2a, 2b, 2c) am Ende des Wellenleiters (5 oder 5a, 5b, 5c) mittels eines für das genannte Licht transparenten Klebstoffs erfolgt.

3. Verfahren nach Anspruch 2, dadurch gekennzeichnet, daß der genannte Klebstoff darüberhinaus ein polymerisierbarer Klebstoff ist.

4. Verfahren nach Anspruch 2, dadurch gekennzeichnet, daß der zum Befestigen des Endes der Faser (2 oder 2a, 2b, 2c) am Ende des Wellenleiters (5 oder 5a, 5b, 5c) bestimmte Klebstoff darüberhinaus ein durch Bestrahlung polymerisierbarer Klebstoff ist und dadurch polymerisiert wird, daß man die Strahlung auf den genannten Klebstoff mittels eines Richtfernrohrs (38) sendet, das auf die genannten Enden ausgerichtet ist, die einander angenähert und durch den genannten Klebstoff miteinander verbunden sind, wobei das Fernrohr zuvor die Prüfung der gegenseitigen Positionierung der genannten Enden ermöglicht.

5. Verfahren nach einem der Ansprüche 3 und 4, dadurch gekennzeichnet, daß der Faserträger (8 oder 39) mit dem Hauptträger (7 oder 33) mittels eines polymerisierbaren Klebstoffs starr verbunden wird und daß der Klebstoff, der zur Befestigung des Endes der Faser (2 oder 2a, 2b, 2c) am Ende des Wellenleiters (5 oder 5a, 5b, 5c) bestimmt ist, vor dem Klebstoff polymerisiert wird, der dazu bestimmt ist, den Faserträger starr mit dem Hauptträger zu verbinden, und wobei jegliche Polymerisation des letztgenannten Klebstoffs vermieden wird.

6. Verfahren nach Anspruch 5, dadurch gekennzeichnet, daß der Klebstoff, der dazu bestimmt ist, den Faserträger (8 oder 39) und den Hauptträger (7 oder 33) miteinander fest zu verbinden, ein durch Bestrahlung polymerisierbarer Klebstoff ist, und daß der Faserträger ein Teil (9 oder 37) enthält, das dazu geeignet ist, wenigstens teilweise die Strahlung durchzulassen, die zum Polymerisieren des Klebstoffs bestimmt ist, der der festen Verbindung des Faserträgers und des Hauptträgers miteinander dient, und daß dieser letztgenannte Klebstoff zwischen dem genannten Teil (9 oder 37) und dem Hauptträger (7 oder 33) derart angeordnet ist, daß letztere miteinander fest verbunden werden, und dadurch polymerisiert wird, daß man auf ihn und durch das Teil (9 oder 37) die ihm entsprechende Strahlung sendet.

7. Verfahren nach einem der Ansprüche 1 bis 6, dadurch gekennzeichnet, daß vor dem Befestigen des Endes der Faser (2 oder 2a, 2b, 2c) und des Endes des Wellenleiters (5 oder 5a, 5b, 5c) aneinander diese relativ zueinander derart positioniert werden, daß ein Maximum an Licht von der Faser zum Wellenleiter oder umgekehrt gelangt.

FIG.1

EP 0 126 003 B1

# FIG.2

# FIG.3

# FIG.4

FIG.5